# EUROPÄISCHE PATENTANMELDUNG

(11) **EP 3 767 532 A1**
(43) Veröffentlichungstag der Anmeldung: **20.01.2021**
(21) Anmeldenummer: 20184158.2
(22) Anmeldetag: 06.07.2020
(51) Int. Cl.: G06K 9/46

(54) **BESTIMMEN EINER VERTEIL- UND/ODER SORTIERINFORMATION ZUM AUTOMATISIERTEN VERTEILEN UND/ODER SORTIEREN EINER SENDUNG**

(30) Priorität: 15.07.2019 DE 102019119138
(71) Anmelder: Deutsche Post AG, 53113 Bonn (DE)
(72) Erfinder: Hartmann, Bernd, 53501 Grafschaft-Leimersdorf (DE)
(74) Vertreter: Cohausz & Florack

(57) **Zusammenfassung**

Es wird unter anderem ein Verfahren ausgeführt durch zumindest eine Vorrichtung (1) offenbart, wobei das Verfahren umfasst:
- Erhalten (20) von Bilddaten, wobei die Bilddaten ein Bild (3) einer durch einen Bildsensor erfassten Oberfläche einer Sendung repräsentieren,
- Bestimmen (21), zumindest teilweise basierend auf den Bilddaten, mit den Bilddaten assoziierte Metadaten, wobei die Metadaten mehrere Bildmerkmale des durch die Bilddaten repräsentierten Bilds (3) repräsentieren, wobei jedes Bildmerkmal der durch die Metadaten repräsentierten Bildmerkmale ein Bildbestandteil des durch die Bilddaten repräsentierten Bilds ist, und
- Bestimmen (23) einer Verteil- und/oder Sortierinformation zum automatisierten Verteilen und/oder Sortieren der Sendung zumindest teilweise basierend auf den durch die Metadaten repräsentierten Bildmerkmalen.

## Beschreibung

### Gebiet

Beispielhafte Ausführungsformen der Erfindung betreffen ein Verfahren, eine Vorrichtung, ein System und ein Computerprogramm im Zusammenhang mit dem Bestimmen einer Verteil- und/oder Sortierinformation zum automatisierten Verteilen und/oder Sortieren einer Sendung.

### Hintergrund

Im Stand der Technik sind Verfahren erkannt, bei denen die in Adressfeldern von Sendungen enthaltenen Schriftzeichen automatisch erkannt und ausgewertet werden, um die Sendungen automatisch sortieren und verteilen zu können. Wenn die in einem Adressfeld enthaltenen Schriftzeichen nicht oder nicht vollständig erfasst werden können (z.B. weil das Adressfeld teilweise verdeckt ist oder um eine Ecke der Sendung geklebt ist) oder die Schriftzeichen beispielsweise arabische, kyrillische, griechische oder asiatische Schriftzeichen (z.B. thailändische, chinesische oder japanische Schriftzeichen) sind, ist eine automatische Erkennung und Auswertung häufig nicht möglich, so dass in diesen Fällen eine manuelle Auswertung (z.B. mit Hilfe eines Übersetzers) erfolgen muss.

### Zusammenfassung einiger beispielhafter Ausführungsformen der Erfindung

Die vorliegende Erfindung hat sich daher unter anderem die Aufgabe gestellt, die oben beschriebenen Nachteile des Stands der Technik zu überwinden.

Gemäß der Erfindung wird ein Verfahren ausgeführt durch zumindest eine Vorrichtung offenbart, wobei das Verfahren umfasst:
- Erhalten von Bilddaten, wobei die Bilddaten ein Bild einer durch einen Bildsensor erfassten Oberfläche einer Sendung repräsentieren,
- Bestimmen, zumindest teilweise basierend auf den Bilddaten, mit den Bilddaten assoziierte Metadaten, wobei die Metadaten mehrere Bildmerkmale des durch die Bilddaten repräsentierten Bilds repräsentieren, wobei jedes Bildmerkmal der durch die Metadaten repräsentierten Bildmerkmale ein Bildbestandteil des durch die Bilddaten repräsentierten Bilds ist, und
- Bestimmen einer Verteil- und/oder Sortierinformation zum automatisierten Verteilen und/oder Sortieren der Sendung zumindest teilweise basierend auf den durch die Metadaten repräsentierten Bildmerkmalen.

Dass das Verfahren von zumindest einer Vorrichtung ausgeführt wird, soll beispielsweise so verstanden werden, dass entweder alle Schritte des Verfahrens von derselben Vorrichtung (z.B. einer der im Folgenden offenbarten Vorrichtungen) ausgeführt werden oder dass die Schritte des Verfahrens zumindest teilweise von verschiedenen Vorrichtungen (z.B. mehrere der im Folgenden offenbarten Vorrichtungen) ausgeführt werden.

Gemäß der Erfindung wird eine Vorrichtung offenbart, wobei die Vorrichtung Mittel eingerichtet zur Ausführung des offenbarten Verfahrens oder jeweilige Mittel zur Ausführung der Schritte des offenbarten Verfahrens umfasst. Dabei können ein oder mehrere Schritte von den gleichen Mitteln oder verschiedene Schritte von verschiedenen Mitteln ausgeführt werden. Die Mittel der offenbarten Vorrichtung können Hardware-und/oder Software-Komponenten umfassen.

Die Mittel können beispielsweise mindestens einen Speicher mit Programmanweisungen eines Computerprogramms (z.B. des im Folgenden offenbarten Computerprogramms) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren auszuführen und/oder zu steuern.

Ferner können die Mittel der Vorrichtung beispielsweise eine (z.B. drahtlose und/oder drahtgebundene) Kommunikationsschnittstellen (z.B. ein drahtlose und/oder drahtgebundene Netzwerkadapter) und/oder eine Benutzerschnittstelle (z.B. eine Tastatur, eine Maus, einen Bildschirm, einen berührungsempfindlichen Bildschirm, einen Lautsprecher, ein Mikrofon, eine Kamera usw.) und/oder einen Bildsensor (z.B. ein CMOS-Sensor, ein CCD-Sensor oder eine Kamera) umfassen. Es versteht sich, dass die Vorrichtung alternativ oder zusätzlich weitere Mittel umfassen kann.

Zum Beispiel ist die Vorrichtung ein Server. Ein solcher Server kann zum Beispiel sowohl ein physikalischer Server (d.h. ein Server mit Hardware- und/oder Software-Komponenten) als auch ein virtueller Server sein. Dabei soll unter einem virtuellen Server beispielsweise eine durch Hardware- und/oder Software-Komponenten eines oder mehrerer physikalischer Server (z.B. mehrere Server einer sogenannten Servercloud) bereitgestellte Serverfunktionalität verstanden werden. Zum Beispiel können mehrere physikalische Server zusammenwirken, um die Serverfunktionalität eines solchen virtuellen Servers bereitzustellen.

Gemäß der Erfindung wird ferner ein System umfassend mehrere Vorrichtungen offenbart, wobei die Vorrichtungen zur gemeinsamen Ausführung des offenbarten Verfahrens eingerichtet sind. Eine der Vorrichtungen ist beispielsweise eine der oben offenbarten Vorrichtungen (z.B. ein Server) und eine andere der Vorrichtungen ist beispielsweise eine automatische Sortier- und/oder Verteilvorrichtung.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die offenbarte(n) Vorrichtung(en)) zu veranlassen, das offenbarte Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren, die offenbarte(n) Vorrichtung(en), das offenbarte System und das offenbarte Computerprogramm sind beispielsweise zum Bestimmen einer Verteil- und/oder Sortierinformation zum automatisierten Verteilen und/oder Sortieren einer Sendung.

Im Folgenden werden die Merkmale des offenbarten Verfahrens, der offenbarten Vorrichtung(en), des offenbarten Systems und des offenbarten Computerprogramms - teilweise beispielhaft - beschrieben.

Eine Sendung ist beispielsweise ein Packstück, eine Paketsendung (z.B. ein Paket) und/oder eine Briefsendung (z.B. ein Brief). Typischerweise befindet sich auf der Oberfläche einer solchen Sendung ein Adressfeld, in dem Schriftzeichen enthalten sind, die den Empfänger und/oder den Absender der Sendung angeben. Dabei soll unter der Oberfläche der Sendung die von außen sichtbare Oberfläche der Sendung, insbesondere der Hülle (z.B. der Verpackung) der Sendung, verstanden werden.

Unter dem Erhalten der Bilddaten durch die zumindest eine Vorrichtung, die das offenbarte Verfahren ausführt, soll beispielsweise verstanden werden, dass die Bilddaten von einer entfernten Vorrichtung (z.B. über ein drahtlose oder drahtgebundene Kommunikationsverbindung) empfangen werden oder durch einen Bildsensor, der Teil der Vorrichtung, die das offenbarte Verfahren ausführt, ist, erzeugt werden. Dementsprechend kann der Bildsensor beispielsweise Teil der zumindest einen Vorrichtung, die das Verfahren ausführt, oder Teil einer von der zumindest einen Vorrichtung, die das Verfahren ausführt, entfernten Vorrichtung sein.

Die Bilddaten repräsentieren das Bild der durch den Bildsensor erfassten Oberfläche der Sendung beispielsweise in codierter und/oder digitaler Form (z.B. als Raster- und/oder Pixelgrafik). Insbesondere können die Bilddaten das der durch den Bildsensor erfassten Oberfläche der Sendung gemäß einem standardisierten Bilddatenformat repräsentieren. Ein Beispiel für ein solches standardisiertes Bilddatenformat für eine Raster- und/oder Pixelgrafik ist das JPEG File Interchange Format (JFIF) oder das Tagged Image File Format (TIFF). Das JFIF-Bilddatenformat wird unter anderem durch die ITU-T Recommendation T.871, die derzeit unter https://www.itu.int/rec/T-REC-T.871 erhältlich ist, spezifiziert; und die Spezifikation des TIFF-Bilddatenformats ist in der Version 6.0 derzeit unter https://www.adobe.io/open/standards/TIFF.html erhältlich.

Die Bilddaten werden beispielsweise von dem Bildsensor als Ergebnis des Erfassens der Oberfläche der Sendung derart erzeugt, dass sie das Bild der durch den Bildsensor erfassten Oberfläche der Sendung repräsentieren. Es versteht sich, dass der Bildsensor die gesamte Oberfläche oder einen Teil der Oberfläche der Sendung erfassen kann. Dementsprechend kann das durch die Bilddaten repräsentierte Bild die gesamte Oberfläche oder einen Teil der Oberfläche der Sendung darstellen.

Zumindest teilweise basierend auf den Bilddaten werden mit den Bilddaten assoziierte Metadaten bestimmt. Mit anderem Worten werden die Bilddaten beim Bestimmen der mit den Bilddaten assoziierte Metadaten berücksichtigt. Dabei umfasst das Bestimmen der mit den Bilddaten assoziierte Metadaten beispielsweise das Anwenden eines Bildverarbeitungsverfahrens und/oder eines Bildverarbeitungsalgorithmus (z.B. ein Segmentierungsverfahren und/oder ein Segmentierungsalgorithmus wie unten im Detail offenbart) auf die Bilddaten oder das durch die Bilddaten repräsentierte Bild.

Dabei sind die Metadaten dadurch, dass sie mehrere Bildmerkmale des durch die Bilddaten repräsentierten Bilds repräsentieren, mit den Bilddaten assoziiert. Die mit den Bilddaten assoziierte Metadaten können den Bilddaten beispielsweise hinzugefügt und/oder gemeinsam mit den Bilddaten gespeichert werden. Es versteht sich, dass die Metadaten auch separat von den Bilddaten sein und/oder gespeichert werden können.

Ein Bildbestandteil des durch die Bilddaten repräsentierten Bilds ist beispielsweise jedes in dem Bild enthaltene Element (z.B. ein oder mehrere Pixel) und/oder Segment (z.B. eine Gruppe von Pixeln) wie eine Kante, eine Ecke, eine Region, eine markante Stelle oder ein Muster. Unter einem Bildmerkmal soll beispielsweise ein für das durch die Bilddaten repräsentierte Bild und/oder einen (z.B. vorgegebenen) Bildausschnitt des durch die Bilddaten repräsentierten Bilds charakteristischer Bildbestandteil verstanden werden. Zum Beispiel ist ein solches Bildmerkmal (z.B. jedes der Bildmerkmale) ein in dem Bild und/oder einem (z.B. vorgegebenen) Bildausschnitt des Bilds enthaltenes Segment wie eine Kante, eine Ecke, eine Region, eine markante Stelle oder ein Muster. Dementsprechend umfasst das Bestimmen der Metadaten beispielsweise das Bestimmen der Bildmerkmale zumindest teilweise basierend auf den Bilddaten. Zum Beispiel können die Bildmerkmale als Ergebnis des Anwendens eines Segmentierungsverfahrens und/oder eines Segmentierungsalgorithmus auf die Bilddaten und/oder das durch die Bilddaten repräsentierte Bild erhalten werden. Beispiele für solche Segmentierungsverfahren und/oder Segmentierungsalgorithmen sind pixelorientierte Segmentierungsverfahren (z.B. Schwellenwertverfahren), kantenorientierte Segmentierungsverfahren (z.B. Kantendetektionsverfahren wie der Sobel-Operator, der Scharr-Operator oder das Laplace-Filter), regionenorientierte Segmentierungsverfahren (z.B. das Region Growing Verfahren), modellbasierte Segmentierungsverfahren (z.B. die Hough-Transformation) und Detektionsverfahren zum detektierten markanter Stellen (z.B. Detektionsverfahren gemäß dem SIFT (Scale-Invariant Feature Transform)-Algorithmus oder dem SURF (Speeded Up Robust Features)-Algorithmus). Es versteht sich, dass die Erfindung nicht auf diese Segmentierungsverfahren und/oder Segmentierungsalgorithmen beschränkt ist.

Ferner umfasst das Bestimmen der Metadaten beispielsweise das Bestimmen einer Repräsentation der Bildmerkmale. Dass die Metadaten mehrere Bildmerkmale des durch die Bilddaten repräsentierten Bilds repräsentieren, soll beispielsweise derart verstanden werden, dass die Metadaten für jedes der Bildmerkmale eine jeweilige Eigenschaft (z.B. eine Position, eine Form, eine Größe, eine Farbgebung oder eine Orientierung des Bildbestandteils) des jeweiligen Bildmerkmals oder eine Eigenschaft der jeweiligen Umgebung des jeweiligen Bildmerkmals repräsentiert. Zu diesem Zweck können die Metadaten für jedes der Bildmerkmale eine jeweilige Repräsentation in Form eines Vektors repräsentieren, der eine oder mehrere Eigenschaften des jeweiligen Bildmerkmals enthält und/oder beschreibt. Ein solcher Vektor kann beispielsweise als Ergebnis des Anwendens eines Verfahrens und/oder eines Algorithmus auf die Bilddaten und/oder das durch die Bilddaten repräsentierte Bild erhalten werden. Beispiele für ein solches Verfahren und/oder ein solchen Algorithmus sind ein Verfahren und/oder ein Algorithmus zum Beschreiben markanter Stellen wie dem SIFT (Scale-Invariant Feature Transform)-Algorithmus oder dem SURF (Speeded Up Robust Features)-Algorithmus. Dementsprechend können die Bildmerkmale durch die Metadaten als SIFT-Bildmerkmale oder SURF-Bildmerkmale in Form eines Vektors repräsentiert werden. Es versteht sich, dass die Erfindung nicht auf diese Verfahren und/oder Algorithmen beschränkt ist.

Anschließend erfolgt das Bestimmen der Verteil- und/oder Sortierinformation zum automatisierten Verteilen und/oder Sortieren der Sendung zumindest teilweise basierend auf den durch die Metadaten repräsentierten Bildmerkmalen. Mit anderen Worten werden die durch die Metadaten repräsentierten Bildmerkmale beim Bestimmen der Verteil- und/oder Sortierinformation zum automatisierten Verteilen und/oder Sortieren der Sendung berücksichtigt. Dabei erfolgt das Bestimmen der Verteil- und/oder Sortierinformation zum automatisierten Verteilen und/oder Sortieren der Sendung gemäß einem (z.B. vorgegebenen) Algorithmus und/oder Datenmodell. Zum Beispiel erhalten ein solcher Algorithmus und/oder ein solches Datenmodell die durch die Metadaten repräsentierten Bildmerkmale als Eingangsparameter. Der Algorithmus und/oder das Datenmodell können beispielsweise vorgeben für welche durch die Metadaten repräsentierten Bildmerkmale welche Verteil- und/oder Sortierinformation bestimmt werden soll.

Zu diesem Zweck können der Algorithmus (z.B. ein Klassifikator und/oder ein Klassifikationsverfahren) und/oder das Datenmodell (z.B. eine Datenbank oder ein künstliches neuronales Netzwerk) beispielsweise die für andere Sendungen bestimmte Verteil- und/oder Sortierinformationen und Bildmerkmale von Bildern der Oberflächen dieser anderen Sendungen berücksichtigen. Mit anderen Worten kann das Datenmodel auf Verteil- und/oder Sortierinformationen basieren, die für andere Sendungen bestimmt wurden, und Bildmerkmale von Bildern der Oberflächen dieser anderen Sendungen. Insbesondere könnte das Datenmodell keine Information, die die Sendung betrifft, für die die Verteil- und/oder Sortierinformationen zum automatisierten Verteilen und/oder Sortieren der Sendung aktuell bestimmt werden, enthalten. Zum Beispiel können für andere Sendungen bestimmte Verteil- und/oder Sortierinformationen zusammen mit Repräsentationen von Bildmerkmalen von Bildern der Oberflächen dieser anderen Sendungen in Einträgen einer Datenbank gespeichert sein, so dass ein Vergleich der durch die Datenbank repräsentierten Bildmerkmalen und den durch die Metadaten repräsentierten Bildmerkmalen erfolgen kann.

Wenn der Vergleich ergibt, dass in durch die Datenbank repräsentierten Bildmerkmale eines Eintrags den durch die Metadaten repräsentierten Bildmerkmalen zumindest im Wesentlichen ähnlich (z.B. basierend auf einem Ähnlichkeitsmaß und/oder einem vorgegebenen Ähnlichkeitsschwellwert) sind oder entsprechen, kann beispielsweise vorgesehen sein, dass die zusammen mit der Repräsentation dieser Bildmerkmale in dem Eintrag der Datenbank gespeicherte Verteil- und/oder Sortierinformation den durch die Metadaten repräsentierten Bildmerkmalen zugeordnet wird und als Verteil- und/oder Sortierinformation zum automatisierten Verteilen und/oder Sortieren der Sendung bestimmt wird. Das Vergleichen kann beispielsweise gemäß einem Vergleichsverfahren zum Vergleichen von Bildmerkmalen oder deren Repräsentationen erfolgen wie einem Vergleichsverfahren zum Vergleichen von Bildmerkmalen (z.B. SIFT- oder SURF-Bildmerkmalen) in Form von Vektoren, bei denen der Abstand (z.B. der euklidische Abstand) zwischen den jeweiligen Vektoren als Ähnlichkeitsmaß (d.h. desto geringer der Abstand zwischen zwei Vektoren, desto ähnlicher sind sich die durch die Vektoren repräsentierten Bildmerkmale) verwendet wird.

Das Bestimmen der Verteil- und/oder Sortierinformation zum automatisierten Verteilen und/oder Sortieren der Sendung ist dementsprechend solange basierend auf den durch die Metadaten repräsentierten Bildmerkmalen möglich, wie als Ergebnis des Vergleichs den durch die Metadaten repräsentierten Bildmerkmalen zumindest im Wesentlichen ähnliche oder entsprechende in der Datenbank gespeicherte Bildmerkale erhalten werden können. Da die Bildmerkmale unabhängig von einer Erkennung und Auswertung der in dem Adressfeld enthaltenen Schriftzeichen bestimmt werden, ist das Ergebnis dieses Vergleichs unabhängig davon, ob die in dem Adressfeld enthaltenen Schriftzeichen nicht oder nicht vollständig durch den Bildsensor erfasst werden können (z.B. weil das Adressfeld teilweise verdeckt ist oder um eine Ecke der Sendung geklebt ist) oder die Schriftzeichen beispielsweise arabische, kyrillische, griechische oder asiatische Schriftzeichen (z.B. thailändische, chinesische oder japanische Schriftzeichen) sind, so dass die oben im Zusammenhang mit dem Stand der Technik geschilderten Nachteile überwunden werden.

Die Verteil- und/oder Sortierinformation zum automatisierten Verteilen und/oder Sortieren der Sendung ist beispielweise dazu eingerichtet, das Verteilen und/oder Sortieren der Sendung durch eine automatische Verteil- und/oder Sortiervorrichtung zu beeinflussen (z.B. zu steuern), zum Beispiel damit die Sendung zu anderen Sendungen sortiert wird, die im gleichen Zustellbezirk wie die Sendung zugestellt werden sollen. Die Verteil- und/oder Sortierinformation kann beispielsweise in Schriftform und/oder in Form eines zwei dimensionale Codes auf der Oberfläche der Sendung bereitgestellt (z.B. aufgedruckt) werden. Ein Beispiel für einen solchen zwei-dimensionalen Code ist ein alpha-numerischer Code, ein Barcode oder ein QR-Code. Ein Beispiel für eine Bereitstellung in Schriftform ist eine Adressangabe in einer vorgegebenen Sprache (z.B. der Amtssprache des Zustellbezirks).

In einer beispielhaften Ausführungsform der Erfindung ist zumindest eines der Bildmerkmale zumindest einer der folgenden Bildbestandteile:
- eine jeweilige in dem Bild enthaltene Region,
- eine jeweilige in dem Bild enthaltene Ecke,
- eine jeweilige in dem Bild enthaltene Kante,
- eine jeweilige in dem Bild enthaltene markante Stelle, und/oder
- ein jeweiliges in dem Bild enthaltenes Muster.

Es versteht sich, dass mehrere oder jedes der Bildmerkmale zumindest einer dieser Bildbestandteile sein kann.

Wie oben offenbart, ist jeder dieser Bildbestandteile ein jeweiliges in dem Bild enthaltenes Segment, das als Ergebnis eines auf das Bild angewendeten Segmentierungsverfahrens und/oder Segmentierungsalgorithmus erhalten werden kann.

Zum Beispiel ist die jeweilige in dem Bild enthaltene Region, Ecke, Kante, markante Stelle und/oder das jeweilige in dem Bild enthaltene Muster ein Adressfeld der Sendung oder ein Teil des Adressfelds der Sendung. Zum Beispiel werden nur das Adressfeld der Sendung oder Bildbestandteile die Teil des Adressfelds der Sendung beim Bestimmen der Metadaten (z.B. beim Bestimmen der Bildmerkmale im Rahmen des Bestimmens der Metadaten) berücksichtigt. Es versteht sich, dass alternativ oder zusätzlich zu dem Adressfeld der Sendung auch andere Bildausschnitte des Bilds beim Bestimmen der Metadaten (z.B. beim Bestimmen der Bildmerkmale im Rahmen des Bestimmens der Metadaten) berücksichtigt werden können.

In einer beispielhaften Ausführungsform der Erfindung repräsentieren die Metadaten, für zumindest eines der Bildmerkmale, zumindest eine der folgenden Eigenschaften des jeweiligen Bildmerkmals oder seiner Umgebung:
- eine Größe (z.B. in Form einer Flächenangabe und/oder einer Anzahl von Pixeln, die Teil des Bildmerkmals sind) des jeweiligen Bildmerkmals,
- eine Form und/oder Kontur (z.B. in Form einer Längenangabe des Umfang und/oder einer Anzahl von Pixeln, die zu dem Bildmerkmal benachbart sind, und/oder in Form eines Fourierdeskriptors) des jeweiligen Bildmerkmals,
- eine Position des jeweiligen Bildmerkmals,
- eine Farbgebung des jeweiligen Bildmerkmals oder in der Umgebung des jeweiligen Bildmerkmals,
- eine Orientierung des jeweiligen Bildmerkmals oder seiner Umgebung,
- ein geometrischer Schwerpunkt des jeweiligen Bildmerkmals,
- Momente (z.B. Masse (z.B. in Form einer Summe der Grauwerte der Pixel, die Teil des Bildmerkmals sind) oder ein Schwerpunkt des Bildmerkmals (z.B. in Form einer Mittelung der Masse und/oder einer Mitteilung des Produkts von Position und Masse)) des jeweiligen Bildmerkmals oder seiner Umgebung.

Wenn das Bildmerkmal beispielsweise ein Adressfeld der Sendung oder ein Teil des Adressfelds der Sendung, können die Metadaten beispielsweise geometrische und/oder topologische Eigenschaften der in dem Adressfeld enthaltenen Schriftzeichen repräsentieren wie beispielsweise:
- eine durch die Schriftzeichen verwendete Fläche (z.B. in Form einer Flächenangabe und/oder einer Anzahl von Pixeln),
- eine Masse der Schriftzeichen (z.B. in Form einer Summe aller Grauwerte der Pixel, die Teil der Schriftzeichen sind),
- einen Umfang der Schriftzeichen (z.B. in Form einer Anzahl aller Pixel, die zu den Schriftzeichen benachbart sind),
- ein Schwerpunkt der Schriftzeichen (z.B. in Form einer Mittelung des Produkts von Position und Masse).

Dabei wird beispielsweise angenommen, dass alle Muster, Ecken und/oder Kanten, die Teil des Adressfelds sind, Schriftzeichen entsprechen, so dass die Metadaten beispielsweise geometrische und/oder topologische Eigenschaften aller in dem Adressfeld enthaltenen Muster, Ecken und/oder Kanten repräsentieren, um die geometrische und/oder topologische Eigenschaften der in dem Adressfeld enthaltenen Schriftzeichen zu repräsentieren.

Es versteht sich, dass die Erfindung nicht auf die offenbarten Eigenschaften beschränkt ist und die Metadaten zusätzlich oder alternativ auch andere Eigenschaften (insbesondere geometrische und/oder topologische Eigenschaften) des jeweiligen Bildmerkmals oder seiner Umgebung repräsentieren können. Vorzugsweise sind die Eigenschaften rotationsinvariant und/oder spiegelungsinvariant und/oder translationsinvariant.

Es versteht sich, dass die Metadaten, für mehrere oder jedes der Bildmerkmale, zumindest eine dieser Eigenschaften des jeweiligen Bildmerkmals oder seiner Umgebung repräsentieren können.

Dementsprechend umfasst das Bestimmen der Metadaten das Bestimmen der Eigenschaft(en) des/der jeweiligen Bildmerkmals/e. Ein solches Bestimmen der Eigenschaften des/der jeweiligen Bildmerkmals/e erfolgt beispielsweise im Rahmen des oben offenbarten Verfahrens und/oder Algorithmus zum Beschreiben markanter Stellen wie dem SIFT (Scale-Invariant Feature Transform)-Algorithmus oder dem SURF (Speeded Up Robust Features)-Algorithmus. Dementsprechend können die Bildmerkmale durch die Metadaten als SIFT-Bildmerkmale oder SURF-Bildmerkmale repräsentiert werden.

In einer beispielhaften Ausführungsform der Erfindung repräsentieren die Metadaten ein oder mehrere der Bildmerkmale in Form eines Vektors. Zum Beispiel repräsentieren die Metadaten jedes der Bildmerkmale in Form eines jeweiligen Vektors.

Wie oben offenbart, kann ein solcher Vektor eine oder mehrere Eigenschaften des jeweiligen Bildmerkmals enthalten und/oder beschreiben. Ein solcher Vektor kann beispielsweise als Ergebnis des Anwendens eines Verfahrens und/oder eines Algorithmus auf die Bilddaten und/oder das durch die Bilddaten repräsentierte Bild erhalten werden. Beispiele für ein solches Verfahren und/oder einen solchen Algorithmus sind ein Verfahren und/oder ein Algorithmus zum Beschreiben markanter Stellen wie dem SIFT (Scale-Invariant Feature Transform)-Algorithmus oder dem SURF (Speeded Up Robust Features)-Algorithmus. Dementsprechend können die Bildmerkmale durch die Metadaten als SIFT-Bildmerkmale oder SURF-Bildmerkmale in Form eines Vektors repräsentiert werden.

In einer beispielhaften Ausführungsform der Erfindung umfasst das Verfahren ferner:
- Bereitstellen der Verteil- und/oder Sortierinformation derart, dass ein automatisiertes Sortieren und/oder Verteilen der Sendung zumindest teilweise basierend auf der Verteil- und/oder Sortierinformation ermöglicht und/oder bewirkt wird.

Die Verteil- und/oder Sortierinformation soll beispielsweise dann als derart, dass ein automatisiertes Sortieren und/oder Verteilen der Sendung zumindest teilweise basierend auf der Verteil- und/oder Sortierinformation ermöglicht und/oder bewirkt wird, bereitgestellt verstanden werden, wenn die Verteil- und/oder Sortierinformation durch eine automatische Verteil- und/oder Sortiervorrichtung, die die Sendung verteilt und/oder sortiert, erhalten (z.B. erfasst und/oder empfangen) werden kann. Zu diesem Zweck kann die Verteil- und/oder Sortierinformation beispielsweise in Schriftform (z.B. als Adressangabe in einer vorgegebenen Sprache) und/oder in Form eines zwei dimensionale Codes auf der Oberfläche der Sendung bereitgestellt (z.B. aufgedruckt) werden. Ein Beispiel für einen solchen zwei-dimensionalen Code ist ein alpha-numerischer Code, ein Barcode oder ein QR-Code. Alternativ oder zusätzlich kann die Verteil- und/oder Sortierinformation an die automatische Verteil- und/oder Sortiervorrichtung gesendet werden.

Das Bereitstellen der Verteil- und/oder Sortierinformation umfasst daher beispielsweise das Aufdrucken der Verteil- und/oder Sortierinformation auf der Oberfläche der Sendung und/oder das Senden der Verteil- und/oder Sortierinformation an eine entfernte Vorrichtung (z.B. eine automatische Verteil- und/oder Sortiervorrichtung).

In einer beispielhaften Ausführungsform der Erfindung umfasst das Verfahren ferner:
- automatisiertes Verteilen und/oder Sortieren der Sendung zumindest teilweise basierend auf der Verteil- und/oder Sortierinformation.

Das automatisierte Verteilen und/oder Sortieren der Sendung wird beispielsweise durch eine automatische Sortier- und Verteilvorrichtung durchgeführt.

Dies soll beispielsweise derart verstanden werden, dass die Verteil- und/oder Sortierinformation beim automatisierten Verteilen und/oder Sortieren der Sendung (z.B. durch eine automatische Verteil- und/oder Sortiervorrichtung) berücksichtigt wird, so dass das Verteilen und/oder Sortieren der Sendung (z.B. durch die automatische Verteil- und/oder Sortiervorrichtung) beeinflusst (z.B. gesteuert) wird. Wie oben offenbart, ist die Verteil- und/oder Sortierinformation zum automatisierten Verteilen und/oder Sortieren der Sendung beispielweise dazu eingerichtet, das Verteilen und/oder Sortieren der Sendung durch eine automatische Verteil- und/oder Sortiervorrichtung zu beeinflussen (z.B. zu steuern), zum Beispiel damit die Sendung zu anderen Sendungen sortiert wird, die im gleichen Zustellbezirk wie die Sendung zugestellt werden sollen.

In einer beispielhaften Ausführungsform der Erfindung umfasst das Verfahren ferner:
- Bereitstellen eines Datenmodells zum Bestimmen der Verteil- und/oder Sortierinformation zum automatisierten Verteilen und/oder Sortieren der Sendung, oder
- Zugreifen auf ein Datenmodell zum Bestimmen der Verteil- und/oder Sortierinformation zum automatisierten Verteilen und/oder Sortieren der Sendung.

Dabei soll unter dem Bereitstellen des Datenmodells beispielsweise verstanden werden, dass das Datenmodell in einem Speicher der zumindest einen Vorrichtung, die das Verfahren ausführt, gespeichert ist; und unter dem Zugreifen auf das Datenmodell soll beispielsweise verstanden werden, dass die zumindest eine Vorrichtung, die das Verfahren ausführt, auf das von einer von der zumindest einen Vorrichtung, die das Verfahren ausführt, entfernten Vorrichtung gespeicherte Datenmodell zugreift (z.B. über eine drahtlose und/oder drahtgebundene Kommunikationsverbindung).

Zum Beispiel basiert das Bestimmen der Verteil- und/oder Sortierinformation zum automatisierten Verteilen und/oder Sortieren der Sendung zumindest teilweise auf dem Datenmodell. Mit anderen Worten kann das Datenmodell beim Bestimmen der Verteil- und/oder Sortierinformation zum automatisierten Verteilen und/oder Sortieren der Sendung berücksichtigt werden.

Zum Beispiel ordnet das Datenmodell den durch die Metadaten repräsentierten Bildmerkmalen die Verteil- und/oder Sortierinformation zum automatisierten Verteilen und/oder Sortieren der Sendung zu.

Zum Beispiel ist das Datenmodell eine Datenbank. Wie oben offenbart, können für andere Sendungen bestimmte Verteil- und/oder Sortierinformationen zusammen mit Repräsentationen von Bildmerkmalen von Bildern der Oberflächen dieser anderen Sendungen in Einträgen der Datenbank gespeichert sein, so dass ein Vergleich der durch die Datenbank repräsentierten Bildmerkmalen und den durch die Metadaten repräsentierten Bildmerkmalen erfolgen kann. Wenn der Vergleich ergibt, dass die durch die Datenbank repräsentierten Bildmerkmale eines Eintrags in der Datenbank den durch die Metadaten repräsentierten Bildmerkmalen zumindest im Wesentlichen ähnlich (z.B. basierend auf einem Ähnlichkeitsmaß und/oder einem vorgegebenen Ähnlichkeitsschwellwert) sind oder entsprechen, kann beispielsweise vorgesehen sein, dass die zusammen mit der Repräsentation dieser Bildmerkmale in dem Eintrag der Datenbank gespeicherte Verteil- und/oder Sortierinformation den durch die Metadaten repräsentierten Bildmerkmalen zugeordnet wird und als Verteil- und/oder Sortierinformation zum automatisierten Verteilen und/oder Sortieren der Sendung bestimmt wird.

Alternativ oder zusätzlich kann das Datenmodell durch maschinelles Lernen erhalten werden. Ein Beispiel für ein solches durch maschinelles Lernen erhaltene Datenmodell ist ein künstliches neuronales Netzwerk. Das Datenmodell wird beispielsweise als Ergebnis einer Lernphase gemäß einem Algorithmus zum maschinellen Lernen (z.B. ein Algorithmus gemäß der Deep Learning Methode) erhalten. In der Lernphase wird das Datenmodell beispielsweise anhand von Ergebnissen des Bestimmens von Verteil- und/oder Sortierinformationen für anderen Sendungen und Bildmerkmale von Bildern der Oberflächen dieser anderen Sendungen trainiert.

Ein solches durch maschinelles Lernen erhaltenes Datenmodell (z.B. ein künstliches neuronales Netzwerk) erhält die durch die Metadaten repräsentierten Bildmerkmale beispielsweise als Eingangsparameter und gibt die diesen Bildmerkmalen durch das Datenmodell zugeordnete Verteil- und/oder Sortierinformation zum automatisierten Verteilen und/oder Sortieren der Sendung als Ausgabeparameter aus.

In einer beispielhaften Ausführungsform der Erfindung erfolgt das Bestimmen der Metadaten unabhängig von einer Erkennung von in dem durch die Bilddaten repräsentierten Bild enthaltenen Schriftzeichen und/oder unabhängig von in dem durch die Bilddaten repräsentierten Bild enthaltenen Schriftzeichen und/oder deren Bedeutung.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform einer Vorrichtung gemäß der Erfindung;
- Fig.2: ein Flussdiagramm einer beispielhaften Ausführungsform eines Verfahrens gemäß der Erfindung;
- Fig. 3a, 3b: schematische Darstellungen eines durch die Bilddaten repräsentierten Bilds einer beispielhaften Ausführungsform gemäß der Erfindung;
- Fig. 4: eine schematische Darstellung einer beispielhaften Ausführungsform einer Datenbank gemäß der Erfindung;
- Fig. 5: beispielhafte Ausführungsformen von Speichermedien.

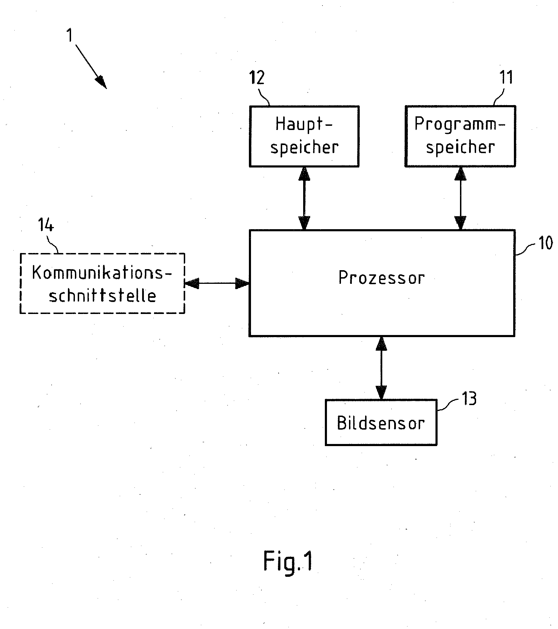

Fig. 1 ist eine schematische Darstellung einer beispielhaften Ausführungsform einer Vorrichtung 1 gemäß der Erfindung.

Die Vorrichtung 1 umfasst beispielhaft einen Prozessor 10 und verbunden mit dem Prozessor 10 einen ersten Speicher als Programmspeicher 11, einen zweiten Speicher als Hauptspeicher 12 und eine Bildsensor 13. Ferner kann die Vorrichtung 1 optional eine Kommunikationsschnittstelle 14 umfassen.

Unter einem Prozessor wie dem Prozessor 10 soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 1 auch mehrere Prozessoren 10 umfassen kann.

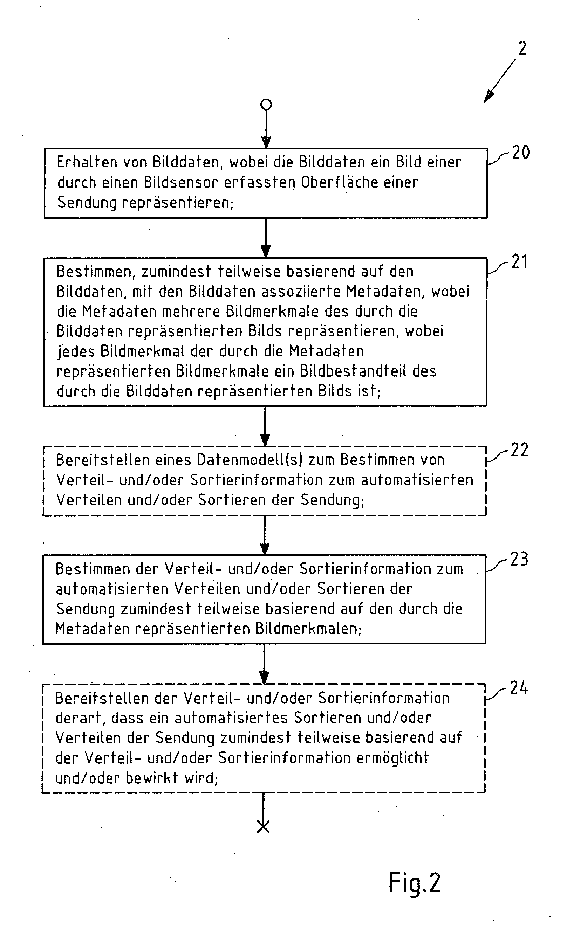

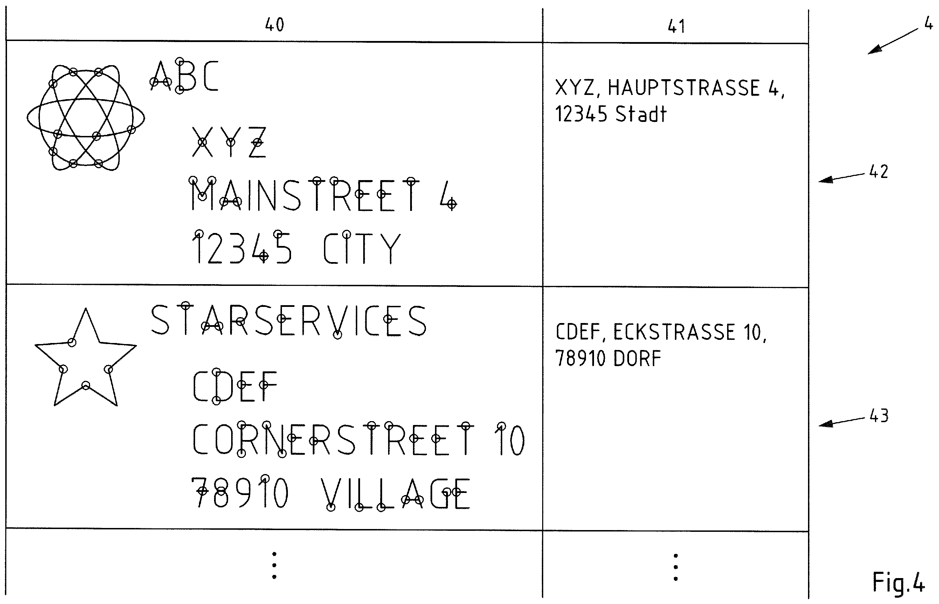

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines Computerprogramms, das Programmanweisungen umfasst, die den Prozessor 10 veranlassen, das offenbarte Verfahren (z.B. das Verfahren gemäß dem in Fig. 2 dargestellten Flussdiagramm 2) auszuführen und/oder zu steuern, wenn der Prozessor 10 diese in Programmspeicher 11 gespeicherten Programmanweisungen ausführt. Außerdem kann der Programmspeicher 11 die in Fig. 4 dargestellte Datenbank 4 umfassen.

Der Programmspeicher 11 enthält ferner beispielsweise das Betriebssystem der Vorrichtung 1, das beim Starten der Vorrichtung 1 zumindest teilweise in Hauptspeicher 12 geladen und vom Prozessor 10 ausgeführt wird. Insbesondere wird beim Starten der Vorrichtung 1 zumindest ein Teil des Kerns des Betriebssystems in den Hauptspeicher 12 geladen und von Prozessor 10 ausgeführt. Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher wie Programmspeicher 11 ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher wie Hauptspeicher 12 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 1 1 auch Teil des Prozessors 10 sein.

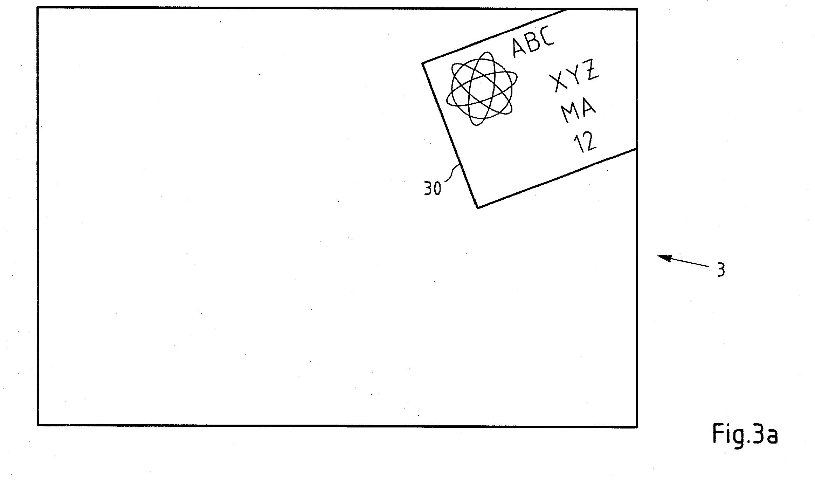

Der Bildsensor 13 ist beispielsweise eingerichtet zum Erfassen einer Oberfläche einer Sendung und zum Erzeugen von Bilddaten, die ein Bild (z.B. das in Fig. 3a dargestellte Bild 3) der durch den Bildsensor 13 erfassten Oberfläche der Sendung repräsentieren. Mittels des Bildsensors 13 kann die Vorrichtung 1 demnach Bilddaten erhalten. Ein Beispiel für einen solchen Bildsensor ist ein CMOS-Sensor, ein CCD-Sensor oder eine Kamera.

Die Kommunikationsschnittstelle 14 der Vorrichtung 1 kann eine drahtlose oder eine drahtgebundene Kommunikationsschnittstelle sein. Die Kommunikationsschnittstelle 14 ist beispielsweise eingerichtet zum Kommunizieren mit entfernten Vorrichtungen über eine drahtlose und/oder drahtgebundene Kommunikationsverbindung. Unter einer drahtgebundenen Kommunikationsverbindung soll vorzugsweise eine Kommunikationsverbindung über ein drahtgebundenes Kommunikationsnetzwerk wie ein Ethernet-Kommunikationsnetzwerk verstanden werden. Ethernet ist zum Beispiel in den Standards der IEEE-802.3-Familie spezifiziert. Ein Beispiel für eine drahtlose Kommunikationsverbindung ist eine Kommunikationsverbindung gemäß einer drahtlosen Kommunikationstechnik wie Wireless Local Area Network (WLAN) oder 2G/3G/4G/5G. WLAN ist zum Beispiel in den Standards der IEEE-802.11-Familie spezifiziert. Die 2G/3G/4G/5G Mobilfunkspezifikationen werden von dem 3rd Generation Partnership Project (3GPP) gepflegt und entwickelt und sind derzeit im Internet unter anderem unter www.3gpp.com erhältlich.

Mittels der Kommunikationsschnittstelle 14 kann die Vorrichtung 1 mit entfernten Vorrichtungen kommunizieren, z.B. Bilddaten von entfernten Vorrichtungen empfangen (d.h. erhalten) und/oder auf eine in einem Speicher einer entfernten Vorrichtung gespeicherte Datenbank zugreifen.

Die Komponenten 10 bis 14 der Vorrichtung 1 sind beispielsweise über ein oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den Komponenten 10 bis 14 weitere Komponenten wie beispielsweise eine Benutzerschnittstelle umfassen kann.

Fig. 2 zeigt ein Flussdiagramm 2 eines Ausführungsbeispiels eines Verfahrens gemäß der Erfindung, dessen Verfahrensschritte 20 bis 24 im Folgenden beispielhaft erläutert werden. Dabei wird angenommen, dass die Verfahrensschritte 20 bis 24 von der oben in Zusammenhang mit Fig. 1 offenbarten Vorrichtung 1 ausgeführt werden.

In einem Schritt 20 erhält die Vorrichtung 1 Bilddaten, wobei die Bilddaten ein Bild einer durch den Bildsensor 13 erfassten Oberfläche einer Sendung repräsentieren.

Zum Beispiel erfasst der Bildsensor 13 die Oberfläche der Sendung und erzeugt die Bilddaten, die ein Bild der durch den Bildsensor 13 erfassten Oberfläche der Sendung repräsentieren, in Schritt 20. Die durch den Bildsensor 13 erzeugten Bilddaten können das Bild der durch den Bildsensor 13 erfassten Oberfläche der Sendung gemäß einem standardisierten Bilddatenformat repräsentieren. Wie oben offenbart, ist ein Beispiel für ein solches standardisiertes Bilddatenformat für eine Raster- und/oder Pixelgrafik das JPEG File Interchange Format (JFIF) oder das Tagged Image File Format (TIFF).

Fig. 3a ist eine schematische Darstellung eines durch die in Schritt 20 erhaltenen Bilddaten repräsentierten Bilds 3 einer beispielhaften Ausführungsform gemäß der Erfindung. Im Folgenden wird davon ausgegangen, dass Fig. 3a das Bild 3 der durch den Bildsensor 13 in Schritt 20 erfassten Oberfläche der Sendung darstellt. Das Bild 3 enthält unter anderem ein Adressfeld 30 der Sendung. In dem Adressfeld 30 befinden sich Schriftzeichen und ein Logo.

In einem Schritt 21 bestimmt die Vorrichtung 1, zumindest teilweise basierend auf den in Schritt 20 erhaltenen Bilddaten, mit den Bilddaten assoziierte Metadaten. Dabei repräsentieren die Metadaten mehrere Bildmerkmale des durch die Bilddaten repräsentierten Bilds 3; und jedes Bildmerkmal der durch die Metadaten repräsentierten Bildmerkmale ist ein Bildbestandteil des durch die Bilddaten repräsentierten Bilds 3.

Wie oben offenbart, soll unter einem Bildmerkmal beispielsweise ein für das durch die Bilddaten repräsentierte Bild 3 und/oder einen (z.B. vorgegebenen) Bildausschnitt des durch die Bilddaten repräsentierten Bilds 3 charakteristischer Bildbestandteil verstanden werden. Zum Beispiel ist ein solches Bildmerkmal (z.B. jedes der Bildmerkmale) ein in dem Bild und/oder einem (z.B. vorgegebenen) Bildausschnitt des Bilds enthaltenes Segment wie eine Kante, eine Ecke, eine Region, eine markante Stelle oder ein Muster.

Dementsprechend umfasst das Bestimmen der Metadaten in Schritt 21 beispielsweise das Bestimmen der Bildmerkmale zumindest teilweise basierend auf den Bilddaten. Zum Beispiel können die Bildmerkmale als Ergebnis des Anwendens eines Segmentierungsverfahrens und/oder eines Segmentierungsalgorithmus auf die Bilddaten und/oder das durch die Bilddaten repräsentierte Bild erhalten werden. Oben beispielhaft offenbarte Segmentierungsverfahren und/oder Segmentierungsalgorithmen sind pixelorientierte Segmentierungsverfahren (z.B. Schwellenwertverfahren), kantenorientierte Segmentierungsverfahren (z.B. Kantendetektionsverfahren wie der Sobel-Operator, der Scharr-Operator oder das Laplace-Filter), regionenorientierte Segmentierungsverfahren (z.B. das Region Growing Verfahren), modellbasierte Segmentierungsverfahren (z.B. die Hough-Transformation) und Detektionsverfahren zum detektierten markanter Stellen (z.B. Detektionsverfahren gemäß dem SIFT (Scale-Invariant Feature Transform)-Algorithmus oder dem SURF (Speeded Up Robust Features)-Algorithmus).

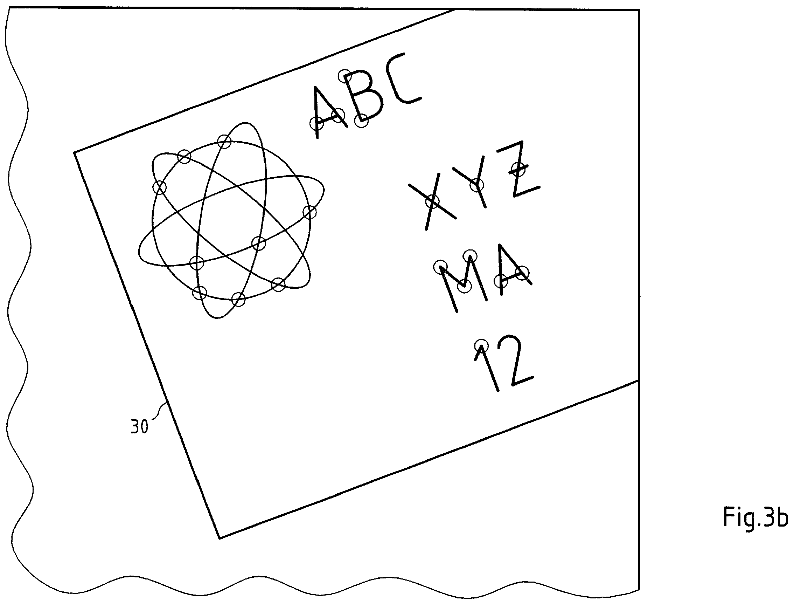

In Fig. 3b ist das Ergebnis des Anwendens eines solchen Segmentierungsverfahrens und/oder eines Segmentierungsalgorithmus auf die in Schritt 20 erhaltenen Bilddaten und/oder das durch die Bilddaten repräsentierte Bild 3 schematisch dargestellt. Fig. 3b stellt einen vergrößerten Bildausschnitt des Bilds 3 mit dem Adressfeld 30 dar. Die als Ergebnis des Anwendens eines Segmentierungsverfahrens und/oder eines Segmentierungsalgorithmus auf die Bilddaten und/oder das durch die Bilddaten repräsentierte Bild 3 erhaltenen Bildmerkmale sind in Fig. 3b eingekreist. Die in Fig. 3b eingekreisten Bildmerkmale sind Teil des Adressfelds 30. Dies ist beispielsweise der Fall, wenn nur das Adressfeld der Sendung oder Bildbestandteile, die Teil des Adressfelds 30 sind, beim Bestimmen der Bildmerkmale im Rahmen des Bestimmens der Metadaten in Schritt 21 berücksichtigt werden, z.B. indem das Segmentierungsverfahrens und/oder der Segmentierungsalgorithmus nur auf einen Teil der in Schritt 20 erhaltenen Bilddaten, der das Adressfeld 30 repräsentiert, oder einen Bildausschnitt des Bilds 3, der das Adressfeld 30 repräsentiert, angewendet werden. Die in Fig. 3b beispielhaft eingekreisten Bildmerkmale sind Kanten, Ecken und andere markante Stellen des Bildausschnitts des Bilds 3, der das Adressfeld 30 repräsentiert. Es versteht sich, dass diese Bildmerkmale lediglich beispielhaft sind und dass das als das Ergebnis des Anwendens eines Segmentierungsverfahrens und/oder eines Segmentierungsalgorithmus auf die in Schritt 20 erhaltenen Bilddaten und/oder das durch die Bilddaten repräsentierte Bild 3 auch völlig andere Bildmerkmale des Bilds 3 erhalten werden können.

Dass die Metadaten mehrere Bildmerkmale des durch die Bilddaten repräsentierten Bilds 3 repräsentieren, soll beispielsweise derart verstanden werden, dass die Metadaten für jedes der Bildmerkmale eine jeweilige Eigenschaft (z.B. eine Position, eine Form, eine Größe, eine Farbgebung oder eine Orientierung des Bildbestandteils) des jeweiligen Bildmerkmals oder eine Eigenschaft der jeweiligen Umgebung des jeweiligen Bildmerkmals repräsentiert. Dementsprechend umfasst das Bestimmen der Metadaten in Schritt 21 beispielsweise das Bestimmen einer Repräsentation der Bildmerkmale oder für jedes der Bildmerkmale.

Ein Beispiel für eine solche Repräsentation eines jeweiligen Bildmerkmals ist ein Vektor, der eine oder mehrere Eigenschaften des jeweiligen Bildmerkmals enthält und/oder beschreibt. Ein solcher Vektor kann beispielsweise als Ergebnis des Anwendens eines Verfahrens und/oder eines Algorithmus auf die Bilddaten und/oder das durch die Bilddaten repräsentierte Bild erhalten werden. Oben offenbarte Beispiele für ein solches Verfahren und/oder ein solchen Algorithmus sind ein Verfahren und/oder ein Algorithmus zum Beschreiben markanter Stellen wie dem SIFT (Scale-Invariant Feature Transform)-Algorithmus oder dem SURF (Speeded Up Robust Features)-Algorithmus. Dementsprechend können die Bildmerkmale durch die Metadaten als SIFT-Bildmerkmale oder SURF-Bildmerkmale in Form eines Vektors repräsentiert werden. Es versteht sich, dass die Erfindung nicht auf diese Verfahren und/oder Algorithmen beschränkt ist.

Im Folgenden wird beispielhaft davon ausgegangen, dass die in Schritt 21 bestimmten Metadaten für jedes der in Fig. 3b eingekreisten Bildmerkmale des Bilds 3 eine jeweilige Position des jeweiligen Bildmerkmals repräsentiert. Dabei können die durch die Metadaten repräsentierten Positionen der in Fig. 3b eingekreisten Bildmerkmale beispielsweise relative Positionen sein, die die Position der in Fig. 3b eingekreisten Bildmerkmale relativ zueinander beschreiben.

In einem optionalen Schritt 22 stellt die Vorrichtung 1 ein Datenmodell zum Bestimmen von Verteil- und/oder Sortierinformation zum automatisierten Verteilen und/oder Sortieren der Sendung bereit. Dies soll beispielsweise derart verstanden werden, dass das Datenmodell in Programmspeicher 11 der Vorrichtung 1 gespeichert ist.

Wie oben offenbart, sind Beispiele für ein solches Datenmodell eine Datenbank und/oder ein durch maschinelles Lernen erhaltenes künstliches neuronales Netzwerk. Sowohl eine solche Datenbank als auch ein solches künstliches neuronales Netzwerk können die für andere Sendungen bestimmte Verteil- und/oder Sortierinformationen und Bildmerkmale von Bildern der Oberflächen dieser anderen Sendungen berücksichtigen. Bei diesen anderen Sendungen kann es sich beispielsweise um in der Vergangenheit liegende Sendungen handeln, für die in der Vergangenheit jeweils eine Verteil- und/oder Sortierinformation bestimmt wurde

Fig.4 ist eine schematische Darstellung einer beispielhaften Ausführungsform einer Datenbank 4 gemäß der Erfindung. Die Datenbank 4 umfasst zwei Spalten 40 und 41 sowie zwei Zeilen 42 und 43. Dabei entspricht jede Zeile jeweils einem Eintrag der Datenbank 4 für eine jeweilige in der Vergangenheit liegende Sendung. Die Spalte 40 enthält für jeden Eintrag in der Datenbank jeweils eine Repräsentation der Bildmerkmale eines Bilds einer Oberfläche der jeweiligen in der Vergangenheit liegenden Sendung; und die Spalte 41 enthält für jeden Eintrag in der Datenbank jeweils die für die jeweilige in der Vergangenheit liegende Sendung bestimmte Sortier- und/oder Verteilinformation.

Die in Spalte 40 repräsentierten Bildmerkmale sind in Fig. 4 eingekreist. Es versteht sich, dass dies lediglich eine schematische Darstellung ist und die Bildmerkmale durch die Datenbank 4 in Spalte 40 auf andere Weise (z.B. in Form von Vektoren) repräsentiert werden können. Auch sind die eingekreisten Bildmerkmale lediglich beispielhaft. Vorzugsweise enthält jeder Eintrag in Spalte 40 eine Repräsentation der Bildmerkmale des Bilds der Oberfläche der jeweiligen in der Vergangenheit liegenden Sendung, die der Form der Repräsentation der Bildmerkmale durch die in Schritt 21 bestimmten Metadaten entspricht. Zum Beispiel werden die in Spalte 40 enthaltenen Repräsentationen auf gleiche Weise wie die in Schritt 21 bestimmten Metadaten bestimmt. Im Folgenden wird daher beispielhaft davon ausgegangen, dass die Datenbank 4 in Spalte 40 für jedes der in Fig. 4 eingekreisten Bildmerkmale eine jeweilige Position des jeweiligen Bildmerkmals repräsentiert. Dabei können die durch die Datenbank 4 in Spalte 40 repräsentierten Positionen der in Fig. 4 eingekreisten Bildmerkmale beispielsweise relative Positionen sein, die die Position der in Fig. 4 eingekreisten Bildmerkmale relativ zueinander beschreiben.

Ferner sind die Verteil- und/oder Sortierinformation in Spalte 41 der Datenbank 4 zur besseren Nachvollziehbarkeit als Adressangaben dargestellt. Es versteht sich, dass die Verteil- und/oder Sortierinformation in Spalte 41 alternativ beispielsweise auch einen zwei-dimensionalen Code wie einen alpha-numerischen Code, einen Barcode oder einen QR-Code repräsentieren können.

Die Datenbank 4 kann weitere Spalten und/oder Zeilen aufweisen.

In einem Schritt 23 bestimmt die Vorrichtung 1 die Verteil- und/oder Sortierinformation zum automatisierten Verteilen und/oder Sortieren der Sendung zumindest teilweise basierend auf den durch die Metadaten repräsentierten Bildmerkmalen. Ferner erfolgt das Bestimmen in Schritt 23 beispielsweise zumindest teilweise basierend auf der Datenbank 4.

Zum Beispiel können die durch die in Schritt 21 bestimmten Metadaten repräsentierten Bildmerkmale mit den durch die Datenbank 4 für die in der Vergangenheit liegenden Sendungen repräsentierten Bildmerkmale verglichen werden. Das Vergleichen kann beispielsweise gemäß einem Vergleichsverfahren zum Vergleichen von Bildmerkmalen oder deren Repräsentationen erfolgen wie einem Vergleichsverfahren zum Vergleichen von SIFT- oder SURF-Bildmerkmalen in Form von Vektoren, bei denen der Abstand (z.B. der euklidische Abstand) zwischen den jeweiligen Vektoren als Ähnlichkeitsmaß (d.h. desto geringer der Abstand zwischen zwei Vektoren, desto ähnlicher sind sich die durch die Vektoren repräsentierten Bildmerkmale) verwendet wird. Wenn der Vergleich ergibt, dass die durch die Datenbank 4 für eine in der Vergangenheit liegende Sendung repräsentierten Bildmerkmale den durch die Metadaten repräsentierten Bildmerkmalen zumindest im Wesentlichen ähnlich (z.B. basierend auf einem Ähnlichkeitsmaß und/oder einem vorgegebenen Ähnlichkeitsschwellwert) sind oder entsprechen, kann beispielsweise vorgesehen sein, dass die zusammen mit der Repräsentation dieser Bildmerkmale in der Datenbank gespeicherte Verteil- und/oder Sortierinformation den durch die Metadaten repräsentierten Bildmerkmalen zugeordnet wird und als Verteil- und/oder Sortierinformation zum automatisierten Verteilen und/oder Sortieren der Sendung in Schritt 23 bestimmt wird.

Vorliegend wird, wie oben offenbart davon ausgegangen, dass die Metadaten und die Datenbank nur die jeweilige Position der Bildmerkmale repräsentieren. Dementsprechend kann das Vergleichen beispielsweise durch einen Vergleich der Positionen erfolgen. Dabei ergibt der Vergleich der Positionen der in Fig. 3b eingekreisten Bildmerkmale mit den Positionen der in Fig. 4 eingekreisten Bildmerkmalen, dass die durch den Eintrag in Zeile 42 repräsentierten Bildmerkmale geringer von den durch die Metadaten repräsentierten Bildmerkmalen abweichen als die durch den Eintrag in Zeile 43 repräsentierten Bildmerkmale. Dementsprechend werden beispielsweise die in dem Eintrag in Zeile 42 in Spalte 41 enthaltenen Verteil- und/oder Sortierinformation in Schritt 23 als Verteil- und/oder Sortierinformation zum automatisierten Verteilen und/oder Sortieren der Sendung bestimmt.

In einem optionalen Schritt 24 stellt die Vorrichtung 1 die in Schritt 23 bestimmten Verteil- und/oder Sortierinformation derart bereit, dass ein automatisiertes Sortieren und/oder Verteilen der Sendung zumindest teilweise basierend auf der Verteil- und/oder Sortierinformation ermöglicht und/oder bewirkt wird. Wie oben offenbart, kann dies beispielsweise durch das Aufdrucken der Verteil- und/oder Sortierinformation auf der Oberfläche der Sendung erfolgen.

Wie im Zusammenhang mit den Darstellungen gemäß Fig. 3a und 3b sowie Fig. 4 deutlich wird, ist dieses Verfahren auch dann durchführbar, wenn eine automatische Erkennung und Auswertung der Schriftzeichen im Adressfeld nicht möglich ist. So ist das Adressfeld 30 in Fig. 3b nur teilweise sichtbar, weil es über die Ecke der dargestellten Sendung geklebt ist, so dass nicht alle darin enthaltenen Schriftzeichen erkannt und ausgewertet werden können. Da das Verfahren mit den Schritten gemäß Flussdiagramm 2 jedoch Bildmerkmale (und keine erkannten Schriftzeichen) beim Bestimmen der Verteil- und Sortierinformationen berücksichtigt, kann gemäß dem erfindungsgemäßen Verfahren die Verteil- und Sortierinformationen - solange die Bildmerkmale zum Beispiel für einen Vergleich mit den in der Datenbank 4 enthaltenen Bildmerkmalen ausreichen - dennoch bestimmt werden. Erfindungsgemäß werden dem Bestimmen (z.B. basierend auf einem Datenmodell (wie einem künstlichen neuronale Netzwerk und/oder einer Datenbank) und/oder einem Algorithmus (wie einem Klassifikator und/oder einem Klassifikationsverfahren)) somit zusätzliche Strukturdaten in Form der Metadaten zur Verfügung gestellt, so dass die Verteil- und Sortierinformation auf der Meta- und/oder Bildebene (im Gegensatz zur Schriftebene) bestimmt werden kann . Eine Interpretation oder Auswertung der im Adressfeld enthaltenen Schriftzeichen oder eine Übersetzung der Schriftinformationen (z.B. von der Sprache der Adressangabe im Adressfeld 30 (hier: Englisch) in eine vorgegebene Sprache (z.B. die Amtssprache des Zustellbezirks, hier: Deutsch)) ist dabei nicht erforderlich. Auch ermöglicht dieses Verfahren die gemeinsame Verarbeitung von verschiedenen Bildbestandteilen wie Adressfeld und Barcode als Bildmerkmale in einem System und/oder mit einem Verfahren. Ferner können dadurch vollautomatisch Sprachbarrieren überwunden, wie durch die englische Adressangabe im Adressfeld 30 und die Verteil- und Sortierinformationen auf Deutsch (d.h. in der Amtssprache des Zustellbezirks) in Datenbank 4 angedeutet.

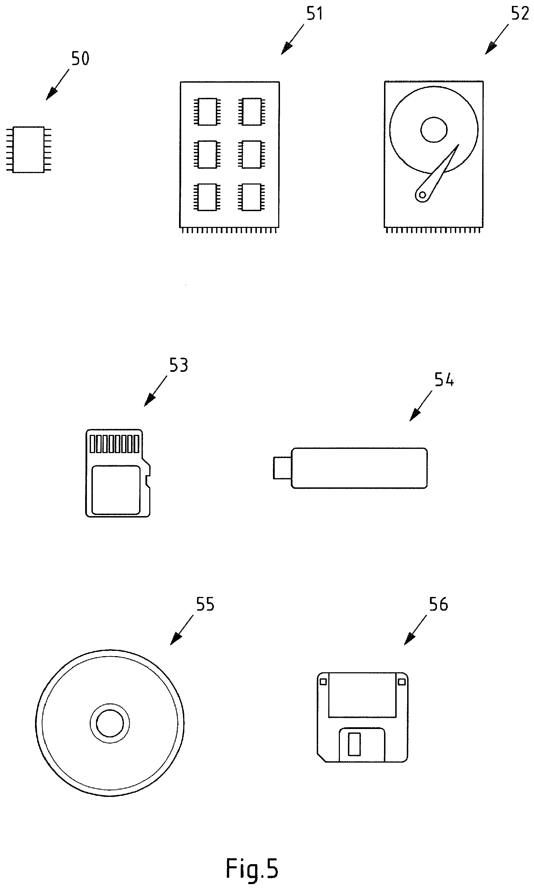

Fig. 5 zeigt schließlich beispielhafte Ausführungsformen von Speichermedien, auf denen ein Ausführungsbeispiel eines erfindungsgemäßen Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 10 der in Fig. 1 dargestellten Vorrichtung 1) sein, beispielsweise ein (nicht-flüchtiger oder flüchtiger) Programmspeicher des Prozessors oder ein Teil davon (z.B. Speicher 11 der in Fig. 1 dargestellten Vorrichtung 1). Ausführungsbeispiele eines Speichermediums sind ein Flash-Speicher 50, eine SSD-Festplatte 51, eine magnetische Festplatte 52, eine Speicherkarte 53, ein Memory Stick 55 (z.B. ein USB-Stick), eine CD-ROM oder DVD 55 oder eine Diskette 56.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren ausgeführt durch zumindest eine Vorrichtung (1), das Verfahren umfassend:
- Erhalten (20) von Bilddaten, wobei die Bilddaten ein Bild (3) einer durch einen Bildsensor erfassten Oberfläche einer Sendung repräsentieren,
- Bestimmen (21), zumindest teilweise basierend auf den Bilddaten, mit den Bilddaten assoziierte Metadaten, wobei die Metadaten mehrere Bildmerkmale des durch die Bilddaten repräsentierten Bilds (3) repräsentieren, wobei jedes Bildmerkmal der durch die Metadaten repräsentierten Bildmerkmale ein Bildbestandteil des durch die Bilddaten repräsentierten Bilds ist, und
- Bestimmen (23) einer Verteil- und/oder Sortierinformation zum automatisierten Verteilen und/oder Sortieren der Sendung zumindest teilweise basierend auf den durch die Metadaten repräsentierten Bildmerkmalen.

2. Verfahren nach Anspruch 1, wobei zumindest eines der Bildmerkmale zumindest einer der folgenden Bildbestandteile ist:
- eine jeweilige in dem Bild (3) enthaltene Region,
- eine jeweilige in dem Bild (3) enthaltene Ecke,
- eine jeweilige in dem Bild (3) enthaltene Kante,
- eine jeweilige in dem Bild (3) enthaltene markante Stelle, und/oder
- ein jeweiliges in dem Bild (3) enthaltenes Muster.

3. Verfahren nach Anspruch 2, wobei die in dem Bild (3) enthaltene Region, Ecke, Kante, markante Stelle und/oder das in dem Bild enthaltene Muster ein Adressfeld (30) der Sendung oder ein Teil des Adressfelds (30) der Sendung repräsentiert.

4. Verfahren nach einem der Ansprüche 1 bis 3, wobei die Metadaten, für zumindest eines der Bildmerkmale, zumindest eine der folgenden Eigenschaften des jeweiligen Bildmerkmals oder seiner Umgebung repräsentieren:
- eine Größe des jeweiligen Bildmerkmals,
- eine Form und/oder Kontur des jeweiligen Bildmerkmals,
- eine Position des jeweiligen Bildmerkmals,
- eine Farbgebung des jeweiligen Bildmerkmals oder in der Umgebung des jeweiligen Bildmerkmals,
- eine Orientierung des jeweiligen Bildmerkmals oder seiner Umgebung,
- ein geometrischer Schwerpunkt des jeweiligen Bildmerkmals,
- Momente (z.B. Schwerpunkt des Bildmerkmals in Form) des jeweiligen Bildmerkmals oder seiner Umgebung.

5. Verfahren nach einem der Ansprüche 1 bis 4, wobei die Metadaten ein oder mehrere der Bildmerkmale in Form eines Vektors repräsentieren.

6. Verfahren nach einem der Ansprüche 1 bis 5, das Verfahren ferner umfassend:
- Bereitstellen (24) der Verteil- und/oder Sortierinformation derart, dass ein automatisiertes Sortieren und/oder Verteilen der Sendung zumindest teilweise basierend auf der Verteil- und/oder Sortierinformation ermöglicht und/oder bewirkt wird, und/oder
- automatisiertes Verteilen und/oder Sortieren der Sendung zumindest teilweise basierend auf der Verteil- und/oder Sortierinformation.

7. Verfahren nach einem der Ansprüche 1 bis 6, das Verfahren ferner umfassend:
- Bereitstellen (22) eines oder Zugreifen auf ein Datenmodell(s) zum Bestimmen der Verteil- und/oder Sortierinformation zum automatisierten Verteilen und/oder Sortieren der Sendung, wobei das Bestimmen der Verteil- und/oder Sortierinformation zum automatisierten Verteilen und/oder Sortieren der Sendung zumindest teilweise auf dem Datenmodell basiert.

8. Verfahren nach Anspruch 7, wobei das Datenmodell den durch die Metadaten repräsentierten Bildmerkmalen die Verteil- und/oder Sortierinformation zum automatisierten Verteilen und/oder Sortieren der Sendung zuordnet.

9. Verfahren nach einem der Ansprüche 7 und 8, wobei das Datenmodell eine Datenbank (4) ist.

10. Verfahren nach einem der Ansprüche 7 bis 9, wobei das Datenmodell durch maschinelles Lernen erhalten wird.

11. Verfahren nach einem der Ansprüche 1 bis 10, wobei das Bestimmen der Metadaten unabhängig von einer Erkennung von in dem durch die Bilddaten repräsentierten Bild (3) enthaltenen Schriftzeichen und/oder unabhängig von in dem durch die Bilddaten repräsentierten Bild (3) enthaltenen Schriftzeichen und/oder deren Bedeutung erfolgt.

12. Computerprogramm, umfassend Programmanweisungen, die dazu ausgebildet sind, bei Ausführung durch mindestens einen Prozessor (10) eine Vorrichtung (1) zu veranlassen, das Verfahren gemäß einem der Ansprüche 1 bis 11 auszuführen.

13. Vorrichtung (1), umfassend:
- Mittel (10-14) eingerichtet zur Ausführung des Verfahrens gemäß einem der Ansprüche 1 bis 11 oder umfassend jeweilige Mittel (10-14) zur Ausführung der Schritte des Verfahrens gemäß einem der Ansprüche 1 bis 11.
